# EUROPEAN PATENT APPLICATION

(11) **EP 4 477 310 A1**
(43) Date of publication of application: **18.12.2024**
(21) Application number: 22926084.9
(22) Date of filing: 13.12.2022
(51) Int. Cl.: B01J 20/22, B01D 53/04

(54) **DESULFURIZING AGENT**

(30) Priority: 08.02.2022 JP 2022017590
(71) Applicant: Panasonic Intellectual Property Management Co., Ltd., Osaka-shi, Osaka 540-6207 (JP)
(72) Inventor: OTA, Tomohiro, Kadoma-shi, Osaka 571-0057 (JP); TAGUCHI, Kiyoshi, Kadoma-shi, Osaka 571-0057 (JP); TAKEDA, Kenyu, Kadoma-shi, Osaka 571-0057 (JP)
(74) Representative: Grünecker Patent- und Rechtsanwälte PartG mbB
(86) International application number: PCT/JP2022/045909
(87) International publication number: WO 2023/153070

(57) **Abstract**

A desulfurizing agent according to Embodiment 1 of the present disclosure is a desulfurizing agent that removes a sulfur compound from a fluid containing the sulfur compound (sulfur component-containing gas). The desulfurizing agent includes: a metal-organic framework (3). The metal-organic framework (3) contains a copper ion, a trimesic acid, and an aromatic carboxylic acid compound. The aromatic carboxylic acid compound is a benzoic acid compound represented by a formula (1) below or an isophthalic acid compound represented by a formula (2) below. Each of R1, R2, R3 in the formula (1) and the formula (2) is a hydrogen atom, a hydroxy group, an amino group, or a sulfo group. At least one of R1, R2, or R3 is one of the hydroxy group, the amino group, or the sulfo group.

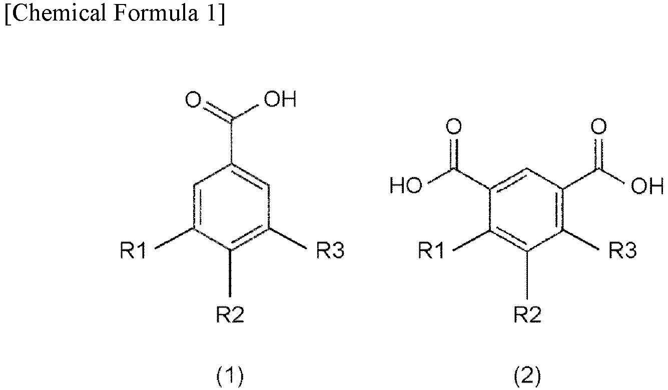

## Description

### TECHNICAL FIELD

The present disclosure relates to a desulfurizing agent.

### BACKGROUND ART

For example, Patent Literature (PTL) 1 discloses a technique in which a fluid containing dimethyl sulfide is brought into contact with a metal-organic framework containing copper ions and organic ligands (benzene-1,3,5-tricarboxylic acid) to remove the dimethyl sulfide from the fluid.

For example, PTL 2 discloses a metal-organic framework composite material in which a silver-based catalyst is supported on a metal-organic framework that contains copper ions and trimesic acid.

For example, Non-Patent Literature (NPL) 1 discloses a technique in which the surface of activated carbon is modified with an acidic group or a basic group by treating the surface with acid or base in order to give the activated carbon a functional group that serves as an active point for sulfur adsorption. The technique increases the amount of adsorption of the sulfur compounds in the activated carbon.

### Citation List

### Patent Literature

[PTL 1] International Publication No. WO2017/150019
[PTL 2] Japanese Unexamined Patent Application Publication No. 2013-144284

### Non-Patent Literature

[NPL 1] International Journal of Hydrogen Energy, vol. 39, 2014, p.6737-6745

### SUMMARY OF THE INVENTION

The present disclosure provides a desulfurizing agent that is capable of reducing the size of a desulfurizer by reducing the amount of the desulfurizing agent filled in the desulfurizer.

A desulfurizing agent according to the present disclosure is a desulfurizing agent that removes a sulfur compound from a fluid containing the sulfur compound. The desulfurizing agent includes a metal-organic framework. The metal-organic framework contains a copper ion, a trimesic acid, and an aromatic carboxylic acid compound. The aromatic carboxylic acid compound is a benzoic acid compound represented by formula (1) below or an isophthalic acid compound represented by formula (2) below. 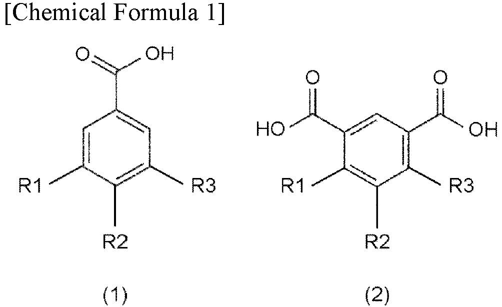
where each of R1, R2, and R3 in the formula (1) and the formula (2) is a hydrogen atom, a hydroxy group, an amino group, or a sulfo group, and
at least one of R1, R2, or R3 is one of the hydroxy group, the amino group, or the sulfo group.

A desulfurizing agent according to the present disclosure is capable of reducing the size of a desulfurizer by reducing the amount of the desulfurizing agent filled in the desulfurizer.

### BRIEF DESCRIPTION OF THE DRAWINGS

FIG. 1 schematically illustrates a desulfurizer according to Embodiment 1.
FIG. 2 is a characteristic diagram showing X-ray powder diffraction patterns of Cu-BTC according to Embodiment 1.
FIG. 3 is a characteristic diagram showing nitrogen adsorption isotherms of Cu-BTC according to Embodiment 1.

### DESCRIPTION OF EMBODIMENT

A desulfurizing agent according to the present disclosure is a desulfurizing agent that removes a sulfur compound from a fluid containing the sulfur compound. The desulfurizing agent includes a metal-organic framework. The metal-organic framework contains a copper ion, a trimesic acid, and an aromatic carboxylic acid compound. The aromatic carboxylic acid compound is a benzoic acid compound represented by formula (1) of [Chemical Formula 1] above or an isophthalic acid compound represented by formula (2) of [Chemical Formula 1].

The desulfurizing agent according to the present disclosure includes a functional group that has a size approximately equal to or smaller than a carboxyl group such as an amino group, a sulfo group, or a hydroxy group.

This increases the number of adsorption sites capable of adsorbing the sulfur compounds in the metal-organic framework without causing a decrease in specific surface area due to pore blockage, compared to the adsorption sites in conventional metal-organic frameworks that contain only copper ions and trimesic acid. As a result, the amount of sulfur adsorbed per volume is increased compared to conventional metal-organic frameworks. Therefore, according to the present disclosure, the amount of the desulfurizing agent filled in the desulfurizer can be reduced, leading to a reduced size of the desulfurizer.

Moreover, it may be that the aromatic carboxylic acid compound is 4-hydroxybenzoic acid.

Moreover, it may be that an amount of the aromatic carboxylic acid compound is at least 10 mol% and at most 40 mol% relative to an amount of the trimesic acid.

Moreover, it may be that the sulfur compound is tetrahydrothiophene.

### (Underlying Knowledge Forming Basis of the Present Disclosure)

At the time the inventors arrived at the present disclosure, Ag zeolite was available in which Ag ions were introduced to the ion exchange sites of zeolite, as a desulfurizing agent to remove sulfur compounds from a fluid containing the sulfur compounds.

This enabled effective removal of even the sulfur compounds that are difficult to adsorb. However, the high cost of Ag that is a raw material has remained an issue in terms of cost.

In view of the above, as a desulfurizing agent to remove sulfur compounds from a fluid containing the sulfur compounds, PTL 1 discloses a metal-organic framework containing copper ions and trimesic acid.

This material has a high content of copper ions in the framework, and has a high specific surface area. Hence, the material enables effective removal of even the sulfur compounds that are difficult to adsorb, and is less expensive than Ag zeolite.

However, since there is a limit in the theoretical amount of adsorption due to the content of the copper ions in the framework that serve as active points, the size of the desulfurizer cannot be further reduced by achieving the amount of adsorption beyond the limit.

There is also a metal-organic framework composite material disclosed in PTL 2, in which a silver-based catalyst is supported on a metal-organic framework that contains copper ions and trimesic acid.

The material exhibits a higher sulfur compound adsorption performance than before the metal-organic framework was composited, because the silver-based catalyst serves as active points for sulfur adsorption.

However, the advantages of the metal-organic framework are not fully utilized because the silver-based catalyst blocks the pores of the metal-organic framework, thereby reducing the theoretical amount of adsorption of the metal-organic framework itself.

Furthermore, Non-Patent Literature (NPL) 1 discloses a technique in which the surface of activated carbon is modified with an acidic group or a basic group by treating the surface with acid or base in order to give the activated carbon a functional group that serves as an active point for sulfur adsorption. The technique increases the amount of adsorption of the sulfur compounds in the activated carbon.

However, surface treatment with strong acid or strong base is required to improve the amount of adsorption, which is not applicable to the metal-organic framework containing copper ions and trimesic acid that have low acid resistance and low base resistance.

Under these circumstances, the inventors have arrived at the idea of introducing a functional group into the organic moiety of the metal-organic framework that contains copper ions and trimesic acid, to increase the adsorption sites without pore blockage and realize a desulfurizer in which a high amount of sulfur compounds is adsorbed per volume.

After arriving at the idea, the inventors have found that in order to reduce the size of the desulfurizer, it is necessary to introduce a functional group into the metal-organic framework by a method that reduces a decrease in specific surface area caused by the pore blockage in the metal-organic framework. The inventors then have arrived at the subject matter of the present disclosure to solve the problem.

In view of the above, the present disclosure provides a desulfurizing agent that is capable of reducing the size of a desulfurizer by reducing the amount of the desulfurizing agent filled in the desulfurizer.

### (Embodiment 1)

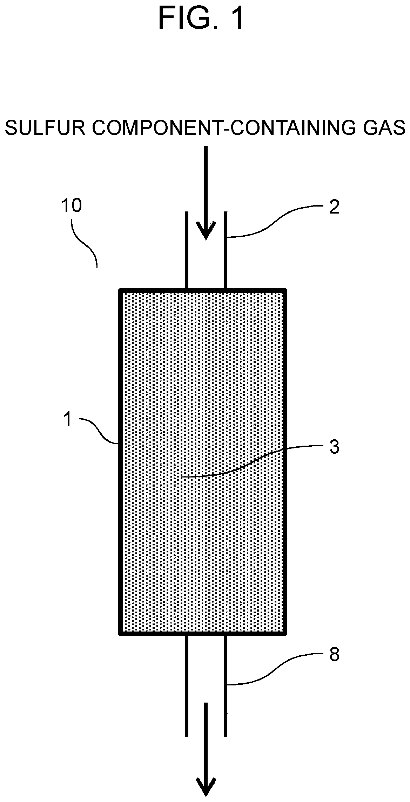

Hereinafter, Embodiment 1 will be described as an example of the present disclosure with reference to FIG. 1 to FIG. 3.

### [1-1. Configuration]

FIG. 1 is a schematic diagram illustrating a configuration of desulfurizer 10 according to Embodiment 1. As illustrated in FIG. 1, desulfurizer 10 according to the present embodiment includes container 1 with inlet 2 and outlet 8 for sulfur component-containing gas. In container 1, metal-organic framework 3 that is a desulfurizing agent that removes sulfur compounds from sulfur component-containing gas is filled.

Metal-organic framework 3 contains: copper ions (Cu²⁺); trimesic acid (C₉H₆O₆) which is also known as 1,3,5-benzene tricarboxylic acid and has a structure in which carboxylic acids are bonded at the positions 1,3 and 5 of the benzene ring, and aromatic carboxylic acid compounds.

The aromatic carboxylic acid compounds are benzoic acid compounds represented by the following formula (1) or isophthalic acid compounds represented by the following formula (2).

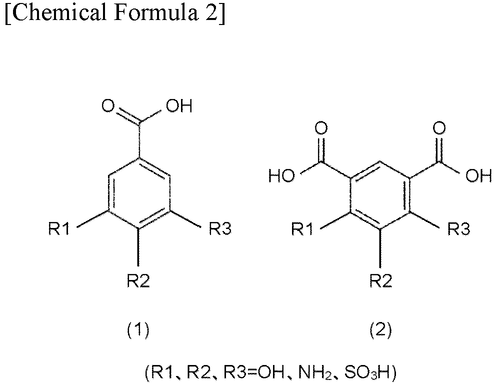

Metal organic framework 3 is a metal-organic framework called Cu-BTC that contains copper ions and trimesic acid, in which a portion of trimesic acid is replaced by the benzoic acid compounds represented by the above formula (1) or isophthalic acid compounds represented by the above formula (2). Each of R1, R2, and R3 in the above formulas (1) and (2) contains one of a hydroxy group, an amino group, or a sulfo group.

Metal-organic framework 3 may be in powder form. For example, it is preferable that the powder has a BET specific surface area of at least 1000 m²/g. The average particle size of primary particles of metal-organic framework 3 is not particularly limited, but is, for example, at least 1 µm and at most 30 µm.

Metal-organic framework 3 has a high specific surface area because the metal-organic framework has a uniform skeletal structure in which molecules contained in the three-dimensional framework are regularly arranged. Metal-organic framework 3 can have precisely set physical or chemical properties such as pore size, pore structure, and surface functionality through an appropriate selection and combination of organic ligands and metal ions. Therefore, compared to conventional desulfurizing agents such as zeolite, metal-organic framework 3 has an extremely high degree of design freedom.

In order to both maintain the specific surface area of metal-organic framework 3 and introduce a functional group that serves as an active point for sulfur adsorption, the inventors focused on the following. In other words, the inventors focused on benzoic acid compounds in which one carboxylic acid is coordinated on the benzene ring and isophthalic acid compounds in which two carboxylic acids are coordinated on the benzene ring, in contrast to trimesic acid in which three carboxylic acids are coordinated on the benzene ring.

In metal-organic framework 3, a portion of the trimesic acid in the Cu-BTC structure is replaced by benzoic acid compounds or isophthalic acid compounds containing at least one of a hydroxy group, an amino group, or a sulfo group. Therefore, metal-organic framework 3 contains one of a hydroxy group, an amino group, or a sulfo group while maintaining the Cu-BTC structure.

### [1-2. Operation]

The operation and action of desulfurizer 10 according to the present embodiment configured as described above will be described below.

Metal-organic framework 3 containing a hydroxy group, an amino group, or a sulfo group is housed (filled) in container 1 of desulfurizer 10.

A sulfur component-containing gas is then supplied to inlet 2 from a sulfur component-containing gas supply source (not illustrated).

The supplied sulfur component-containing gas passes through container 1 while contacting metal-organic framework 3 in container 1.

Since the sulfur compounds are removed from the sulfur component-containing gas by metal-organic framework 3, the sulfur component-containing gas from which the sulfur components have been removed is discharged from outlet 8.

Examples of the sulfur component-containing gas include city gas, natural gas, and hydrocarbon fuel such as liquefied petroleum gas (LPG). The hydrocarbon fuel contains sulfur compounds added for security purposes to allow the hydrocarbon fuel to be detected quickly in the event of a leak. An example of the sulfur compounds contained in the sulfur component-containing gas is tetrahydrothiophene (THT).

The functional group, such as a hydroxy group, an amino group, and a sulfo group, contained in metal-organic framework 3 has a size that is approximately equal to or smaller than the carboxyl group. In some of the locations where the carboxyl group was present in conventional metal-organic frameworks containing only copper ions and trimesic acid, a functional group that has a size that is approximately equal to or smaller than the carboxyl group is present in metal-organic framework 3.

Therefore, it is considered that in metal-organic framework 3, the number of adsorption sites that serve as active points for sulfur adsorption has increased compared to conventional metal-organic frameworks containing only copper ions and trimesic acid, without causing a decrease in specific surface area due to pore blockage, leading to an increased amount of sulfur adsorbed per volume.

Since THT is highly reactive with an acidic group, it is assumed that the amount of adsorption of THT is higher when a hydroxy group or a sulfo group that is an acidic group is introduced.

### [1-3. Advantageous Effects, etc.]

As described above, in the present embodiment, desulfurizer 10 includes container 1 with inlet 2 and outlet 8 for sulfur component-containing gas. In container 1, metal-organic framework 3 is filled.

Metal-organic framework 3 is a metal-organic framework called Cu-BTC that contains copper ions and trimesic acid, in which a portion of the trimesic acid is replaced by the following. In other words, a portion of the trimesic acid is replaced by benzoic acid compounds represented by the formula (1) of [Chemical Formula 2] above or isophthalic acid compounds represented by the formula (2) of [Chemical Formula 2]. Each of R1, R2, and R3 in the formula (1) and formula (2) of [Chemical Formula 2] above contains at least one of a hydroxy group, an amino group, or a sulfo group.

In other words, the desulfurizing agent according to the present disclosure is a desulfurizing agent that removes sulfur compounds from a sulfur component-containing gas. The desulfurizing agent includes metal-organic framework 3. Metal-organic framework 3 contains copper ions, trimesic acid, and aromatic carboxylic acid compounds. The aromatic carboxylic acid compounds are benzoic acid compounds represented by the formula (1) of [Chemical Formula 2] above or isophthalic acid compounds represented by the formula (2) of [Chemical Formula 2] above.

This increases the number of adsorption sites capable of adsorbing sulfur compounds in metal-organic framework 3 without causing a decrease in specific surface area due to pore blockage, compared to the adsorption sites in conventional metal-organic frameworks that contain only copper ions and trimesic acid. As a result, the amount of sulfur adsorbed per volume is increased compared to conventional metal-organic frameworks.

Therefore, metal-organic framework 3 is capable of reducing the amount of desulfurizing agent (metal-organic framework 3) filled in desulfurizer10, thereby reducing the size of desulfurizer 10.

### [Example]

Hereinafter, an example will be described.

### (Synthesis Method)

Many metal-organic frameworks can be synthesized by a well-known solvothermal method (i.e. hydrothermal synthesis). For example, for synthesis of many metal-organic frameworks, a solution of a starting material is first prepared by adding a copper ion source and organic ligands to a solvent such as ethylene glycol. The solution of the starting material is then heated to grow crystals of the metal-organic framework. An example of the copper ion source is copper sulfate hydrate.

The synthesized product with a metal-organic framework is washed using a cleaning fluid to remove remaining raw materials from the product. The cleaning fluid is, for example, methanol with a low viscosity and a low boiling point. The product after washing undergoes solid-liquid separation and drying, so that a powdered metal-organic framework is obtained.

An example of a synthesis method of metal-organic framework 3 according to Embodiment 1 will be described below in detail. In the present embodiment, Cu-BTC-OH-BA synthesized using 4-hydroxybenzoic acid as the benzoic acid compounds, and Cu-BTC-OH-ISO synthesized using 5-hydroxyisophthalic acid as the isophthalic acid compounds will be described.

In Cu-BTC-OH-BA, anhydrous copper sulfate (3.6 mmol), trimesic acid (1.6 mmol), and 4-hydroxybenzoic acid (0.48 mmol) were mixed in ethylene glycol (40mL). The raw material solution was thus prepared. In the raw material solution, the molar ratio of 4-hydroxybenzoic acid to trimesic acid was 30%.

In Cu-BTC-OH-ISO, anhydrous copper sulfate (3.6 mmol), trimesic acid (1.6 mmol), and 5-hydroxyisophthalic acid (0.4 mmol) were mixed in ethylene glycol (40mL). The raw material solution was thus prepared. In the raw material solution, the molar ratio of 5-hydroxyisophthalic acid to trimesic acid was 25%.

Each of the raw material solutions was poured into a sealed container, and then heated at 120°C for 24 hours to obtain the product. The obtained product was subjected to suction filtration to obtain a precipitate. The obtained precipitate was fed into a methanol solution, washed by stirring for 24 hours, and again subjected to suction filtration to obtain a precipitate. Finally, the washed precipitate was dried at 120°C.

Cu-BTC-OH-BA (Example 1) and Cu-BTC-OH-ISO (Example 2) were thus obtained.

Cu-BTC-NH-ISO (Example 3) was obtained by the same synthetic method as Cu-BTC-OH-ISO, but 5-hydroxyisophthalic acid was replaced with 5-aminoisophthalic acid (0.4 mmol). Moreover, Cu-BTC-SO-ISO (Example 4) was obtained by the same synthetic method as Cu-BTC-OH-ISO, but 5-hydroxyisophthalic acid was replaced with 5-sulfoisophthalic acid (0.4 mmol).

Furthermore, Cu-BTC (Comparative Example 1) was obtained as a sample for comparison by performing the same procedure after mixing anhydrous copper sulfate (3.6 mmol) and trimesic acid (2 mmol) in ethylene glycol (40 mL). Cu-BTC-BA (Comparative Example 2) was obtained by performing the same procedure after mixing anhydrous copper sulfate (3.6 mmol), trimesic acid (1.6 mmol), and benzoic acid (0.48 mmol) in ethylene glycol (40 mL).

Furthermore, Cu-BTC-ISO (Comparative Example 3) was obtained by performing the same procedure after mixing anhydrous copper sulfate (3.6 mmol), trimesic acid (1.6 mmol), and isophthalic acid (0.4 mmol) in ethylene glycol (40 mL).

### (Structure Evaluation)

In order to check whether the obtained samples have the same three-dimensional structure as Cu-BTC, Cu-BTC-OH-BA in Example 1 and Cu-BTC-OH-ISO in Example 2 were subjected to X-ray powder diffraction analysis.

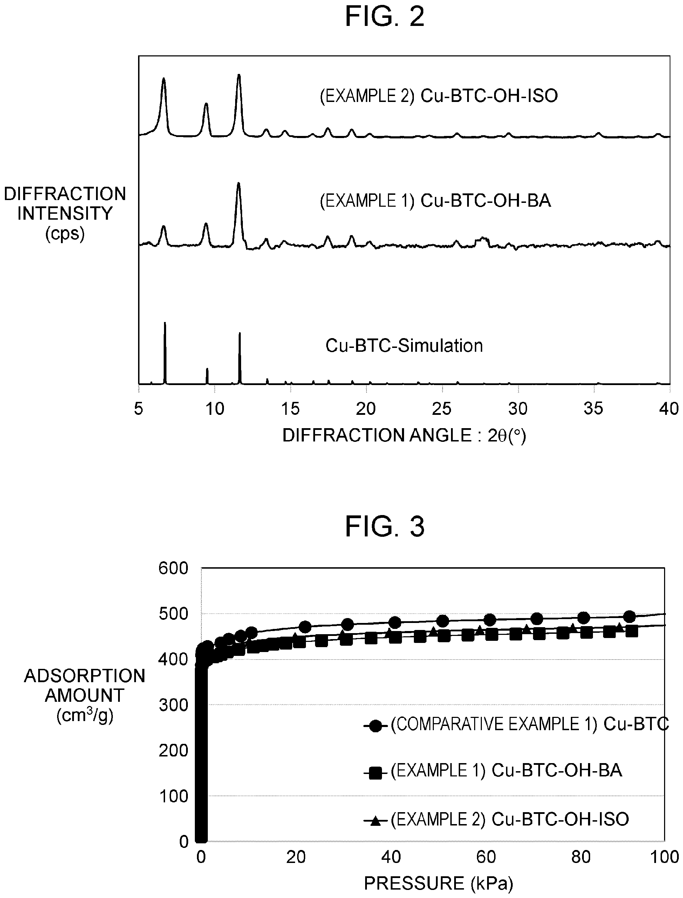

FIG. 2 is a characteristic diagram showing X-ray powder diffraction patterns of samples. In FIG. 2, diffraction intensity is represented on the vertical axis and diffraction angle 2θ is represented on the horizontal axis. The X-ray powder diffraction analysis pattern simulations of Cu-BTC were based on Cambridge Crystal Structural Database, deposition number 112954.

As is clear from FIG. 2, only Cu-BTC-based peaks were identified in Cu-BTC-OH-BA in Example 1 and Cu-BTC-OH-ISO in Example 2.

This made it clear that Cu-BTC-OH-BA in Example 1 and Cu-BTC-OH-ISO in Example 2 have the same three-dimensional crystal structure as Cu-BTC, and contain no other impurity crystals.

Next, the nitrogen adsorption isotherms of Cu-BTC-OH-BA in Example 1 and Cu-BTC-OH-ISO in Example 2 were measured at 77 K.

Before measurement, the samples were heated under vacuum at 150°C for 12 hours to remove residual solvent and adsorbed moisture.

FIG. 3 is a characteristic diagram showing nitrogen adsorption isotherms of samples. In FIG. 3, nitrogen adsorption amount is represented on the vertical axis and adsorption equilibrium pressure is represented on the horizontal axis.

As shown in FIG. 3, the isotherms of the samples in Example 1, Example 2, and Comparative Example 1, were confirmed to be type I isotherms (International Union of Pure and Applied Chemistry (IUPAC) classification) due to the presence of micropores.

Table 1 shows BET specific surface areas of Cu-BTC in Comparative Example 1, Cu-BTC-OH-BA in Example 1, and Cu-BTC-OH-ISO in Example 2 calculated from the adsorption isotherms in FIG. 3 using Brunauer-Emmett-Teller (BET) theory.

**[Table 1]**

| Sample | BET specific surface area (m²/g) |
|---|---|
| (Comparative example 1) Cu-BTC | 1,839 |
| (Example 1) Cu-BTC-OH-BA | 1,740 |
| (Example 2) Cu-BTC-OH-ISO | 1,768 |

As shown in Table 1, the specific surface areas of Cu-BTC-OH-BA in Example 1 and Cu-BTC-OH-ISO in Example 2 were approximately the same as the specific surface area of Cu-BTC in Comparative Example 1 in which benzoic acid or isophthalic acid were not introduced.

Table 2 shows BET specific surface areas of Cu-BTC-BA in Comparative Example 2, Cu-BTC-ISO in Comparative example 3, Cu-BTC-NH-ISO in Example 3, and Cu-BTC-SO-ISO in Example 4.

**[Table 2]**

| Sample | BET specific surface area (m²/g) |
|---|---|
| (Comparative example 2) Cu-BTC-BA | 1,783 |
| (Comparative example3) Cu-BTC-ISO | 1,722 |
| (Example 3) Cu-BTC-NH-ISO | 1,668 |
| (Example 4) Cu-BTC-SO-ISO | 1,621 |

As shown in Table 2, the specific surface areas of Cu-BTC-BA in Example 2 and Cu-BTC-ISO in Comparative example 3 were approximately the same as the specific surface area of Cu-BTC in Comparative Example 1. The specific surface areas of Cu-BTC-NH-ISO in Example 3 and Cu-BTC-SO-ISO in Example 4 were slightly lower than the specific surface area of Cu-BTC in Comparative Example 1.

As described above, in the metal-organic framework (desulfurizing agent) according to the present disclosure, an organic ligand with a functional group such as a hydroxy group, an amino group, and a sulfo group, which has the same degree of steric hindrance as the carboxyl group, is mixed during synthesis. This did not cause, in the metal-organic framework according to the present disclosure in which a functional group is introduced into the metal-organic framework, the disruption of the metal-organic framework backbone due to the process for introducing the functional group nor a significant decrease in specific surface area due to the pore blockage caused by the introduced functional group.

### (Sulfur Adsorption Performance Evaluation)

Table 3 shows THT adsorption amount at 15 ppm in each sample according to Comparative examples 1 to 3 and Examples 1 to 3.

The amount of adsorbed THT was evaluated in the following manner: a sample and THT gas were introduced into a sealed bag; and after leaving the bag for 24 hours, the THT concentration in the bag was analyzed. Specifically, the amount of adsorbed THT was evaluated by measuring the amount of adsorbed THT relative to a plurality of equilibrium concentrations, calculating the adsorption isotherm using Langumuir's equation, assuming that adsorbate molecules have monolayer adsorption, and calculating the amount of adsorption at 15 ppm.

**[Table 3]**

| Sample | THT adsorption amount at 15 ppm (wt%) |
|---|---|
| (Comparative example 1) Cu-BTC | 7.4 |
| (Comparative example 2) Cu-BTC-BA | 11.8 |
| (Comparative example 3) Cu-BTC-ISO | 9.9 |
| (Example 1) Cu-BTC-OH-BA | 12.9 |
| (Example 2) Cu-BTC-OH-ISO | 11.2 |
| (Example 3) Cu-BTC-NH-ISO | 10.5 |
| (Example 4) Cu-BTC-SO-ISO | 10.9 |

As is clear from Table 3, Cu-BTC-OH-BA in Example 1, in which a hydroxy group was introduced, exhibited a higher amount of adsorbed THT than Cu-BTC in Comparative Example 1 and Cu-BTC-BA in Comparative Example 2 in which no hydroxy group was introduced.

Cu-BTC-OH-ISO in Example 2 also exhibited a higher amount of adsorbed THT than Cu-BTC in Comparative Example 1 and Cu-BTC-ISO in Comparative Example 3 in which no hydroxy group was introduced.

Cu-BTC-SO-ISO in Example 4, in which a sulfo group that is also an acid group was introduced, also exhibited a higher amount of adsorbed THT than the samples in which no sulfo group was introduced.

Cu-BTC-NH-ISO in Example 3, in which an amino group that is a basic group was introduced, also exhibited a higher amount of adsorbed THT than the samples in which no amino group was introduced. This indicates that even a basic functional group is effective in increasing the THT adsorption amount, although the effect is smaller than that of the acidic group.

As in the present embodiment, metal-organic framework 3 may have a Cu-BTC structure in which a hydroxy group is introduced by 4-hydroxybenzoic acid.

This increases the number of adsorption sites capable of adsorbing the sulfur compounds in the metal-organic framework without causing a decrease in specific surface area due to pore blockage, compared to the adsorption sites of conventional metal-organic frameworks that contain only copper ions and trimesic acid.

As a result, the amount of sulfur adsorbed per volume is increased compared to conventional metal-organic frameworks. Therefore, metal-organic framework 3 is capable of reducing the amount of the desulfurizing agent filled in desulfurizer 10, leading to a reduced size of desulfurizer 10.

Furthermore, because 4-hydroxybenzoic acid is a less expensive material than trimesic acid, metal-organic framework 3 containing 4-hydroxybenzoic acid is less expensive per volume than conventional metal-organic frameworks containing only copper ions and trimesic acid. Therefore, metal-organic framework 3 containing 4-hydroxybenzoic acid is capable of reducing the cost of desulfurizer 10.

The amount of adsorbed THT in Cu-BTC-OH-BA in Example 1 at 15 ppm in the present embodiment is 1.74 times as high as Cu-BTC in Comparative Example 1. Therefore, it is expected that the storage volume of the desulfurizing agent can be reduced by 1/1.74 times.

As in the present embodiment, the amount of aromatic carboxylic acid compounds to be introduced may be at least 10 mol% and at most 40 mol% relative to the amount of trimesic acid.

When the amount of aromatic carboxylic acid compounds to be introduced is less than or equal to 10 mol%, the amount of functional group introduced to the metal-organic framework is small. This leads to an insufficient effect of increasing the amount of adsorption of sulfur compounds.

When the amount of aromatic carboxylic acid compounds to be introduced is greater than or equal to 40 mol%, the number of mesopores is considered to increase due to the presence of two or more adjacent aromatic carboxylic acid compounds. An increase in mesopores means a disruption of the three-dimensional structure of the metal-organic framework. This leads to a reduction in specific surface area, which makes it unsuitable for use as a desulfurizing agent.

Therefore, by setting the amount of aromatic carboxylic acid compounds to be introduced to at least 10 mol% and at most 40 mol% relative to the amount of trimesic acid, metal-organic framework 3 can be obtained with an increased adsorption amount and little decrease in specific surface area. Therefore, metal-organic framework 3 is capable of sufficiently reducing the volume of desulfurizer 10.

As in the present embodiment, the sulfur compounds may be THT. Since THT is highly reactive with an acidic group, the adsorption of THT on metal-organic frameworks containing a hydroxy group and a sulfo group is promoted further than when other sulfur compounds are used. This further increases the amount of sulfur adsorbed per volume.

Therefore, metal-organic framework 3 is capable of further reducing the amount of desulfurizing agent filled in desulfurizer 10, leading to a further reduced size of desulfurizer 10.

### (Other Embodiments)

As described above, Embodiment 1 has been described as an example of the technique disclosed in the present disclosure. However, the technique according to the present disclosure is not limited to the above example, and can be applied to embodiments in which changes, replacements, additions, omissions, etc. are made as appropriate. Moreover, each structural element described in Embodiment 1 can be combined to form a new embodiment.

Other embodiments will be described below as examples.

In Embodiment 1, 4-hydroxybenzoic acid has been described as an example of benzoic acid compounds containing a hydroxy group. Functionalized benzoic acid compounds may have a hydroxy group, an amino group, a sulfo group or a hydrogen atom at the meta and para positions. Thus, the benzoic acid compounds according to the present disclosure are not limited to 4-hydroxybenzoic acid. However, when 3,5-dihydroxybenzoic acid is used as a material added in the synthesis of the metal-organic framework, a high amount of adsorption of THT can be achieved.

Moreover, in Embodiment 1, 5-hydroxyisophthalic acid has been described as an example of the isophthalic acid compounds containing a hydroxy group. The isophthalic acid compounds according to the present disclosure are not limited to 5-hydroxyisophthalic acid, but may also be 5-aminoisophthalic acid or 5-sulfoisophthalic acid.

In Embodiment 1, tetrahydrothiophene has been described as an example of the sulfur compounds. The sulfur compounds may be any compounds that contain sulfur atoms. Thus, the sulfur compounds according to the present disclosure are not limited to tetrahydrothiophene. However, when tertiary butyl mercaptan, which is highly reactive with a basic group, is used as the sulfur compounds, and Cu-BTC-NH-ISO is used, a high amount of adsorption of sulfur can be achieved.

### INDUSTRIAL APPLICABILITY

The present disclosure is applicable, for example, to a desulfurizing agent that removes sulfur compounds from fuel gas containing the sulfur compounds. Specifically, the present disclosure is applicable, for example, to fuel cells capable of converting city gas into hydrogen and generating electricity.

### REFERENCE MARKS IN THE DRAWINGS

- 1: container
- 2: inlet
- 3: metal-organic framework
- 8: outlet
- 10: desulfurizer

## Claims

1. A desulfurizing agent that removes a sulfur compound from a fluid containing the sulfur compound, the desulfurizing agent comprising:
a metal-organic framework,
wherein the metal-organic framework contains a copper ion, a trimesic acid, and an aromatic carboxylic acid compound, and
the aromatic carboxylic acid compound is a benzoic acid compound represented by a formula (1) below or an isophthalic acid compound represented by a formula (2) below, 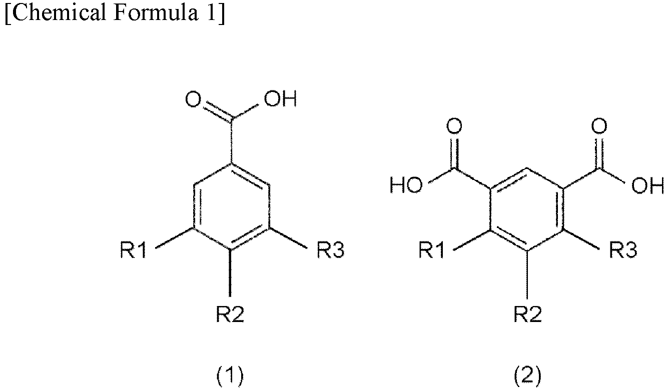
where each of R1, R2, and R3 in the formula (1) and the formula (2) is a hydrogen atom, a hydroxy group, an amino group, or a sulfo group, and
at least one of R1, R2, or R3 is one of the hydroxy group, the amino group, or the sulfo group.

2. The desulfurizing agent according to claim 1,
wherein the aromatic carboxylic acid compound is 4-hydroxybenzoic acid.

3. The desulfurizing agent according to claim 1 or claim 2,
wherein an amount of the aromatic carboxylic acid compound is at least 10 mol% and at most 40 mol% relative to an amount of the trimesic acid.

4. The desulfurizing agent according to any one of claims 1 to 3,
wherein the sulfur compound is tetrahydrothiophene.
